# EUROPEAN PATENT APPLICATION

(11) **EP 1 643 404 A2**
(43) Date of publication of application: **05.04.2006**
(21) Application number: 05025441.6
(22) Date of filing: 28.01.2004
(51) Int. Cl.: G06F 21/00

(54) **Distribution and rights management of digital content**

(30) Priority: 03.02.2003 US 444581 P; 02.12.2003 US 726284
(62) Divisional of application: 04706007.4
(71) Applicant: Tennessee Pacific Group. L.L.C., Franklin, Tennessee 37069 (US)
(72) Inventor: Pou, Robin, Dallas Texas 75225 (US); Jaworski, Dave, Franklin TN 37069 (US); Nuyens, Jozef, Brentwood TN 37027 (US); Edmonson, Brad, Franklin TN 37064 (US); Lewis, Scott, EL Dorado Hills CA 95742 (US)
(74) Representative: HOFFMANN EITLE

(57) **Abstract**

Techniques and systems for managing digital rights can be implemented to protect against unauthorized copying of digital content and to help ensure payment to content owners and distributors. Digital wrappers can be applied (310, 1020) to data files to prevent access (135, 340, 440) without a valid authorization. Information relating to authorizations to access data files and/or keys for accessing the data files may be stored and retrieved using data stored in a non-volatile storage area (220) of a user device (205). Software on the user device can be used to recognize files (110, 415) and to apply digital wrappers (310, 455, 1020) to recognized files. In addition, the software can be used to remove digital wrappers (360, 685, 770) from files in accordance with authorizations to access the files. Payments or other credits can be allocated (920, 940) among distributors of a data file using information associated with the digital wrappers.

## Description

### RELATED APPLICATIONS

The present application claims the benefit of U.S. Provisional Patent Application No. 60/444,581, filed February 3, 2003 entitled "Distribution and Rights Management of Digital Media" and U.S. Patent Application No. 10/726,234, filed December 2, 2003, entitled "Distribution and Rights Management of Digital Content".

### TECHNICAL FIELD

This description relates to digital rights management, and more particularly to facilitating authorized licensing and distribution of digital media.

### BACKGROUND

The music industry is in the midst of significant turmoil. For decades, music companies have been in control of the physical distribution of the content it creates. For the first time in history, consumers have been given tools that have enabled them to seize control of this distribution of content. Rapidly developing and widely adopted technology has resulted in a consumer driven disruptive change to the status quo. The myriad of legal and illegal solutions has proven to be poor attempts to answer and solve the innate challenges of content distribution in a digital world. Although problems with digital distribution of content may be associated to a significant extent with the music industry, other industries, such as the motion picture industry, suffer from the same challenges.

No solution to date has satisfied both the content creator/owner and the consumer. The only digital distribution solution that has been widely adopted is found in the various peer-to-peer networks. However, this solution allows millions of consumers to download music and other forms of copyrighted content without paying for the content they download. Content owners are left with no ability to collect fees owed to them. This situation has caused devastating revenue losses.

Through their endorsement of digital subscription services among other things, many content creating entities such as the music companies have acknowledged that digital distribution is the future. It is the most efficient and economical means of distribution. To date, the music industry has still not fully embraced the potential of this distribution vehicle. Digital distribution is also becoming prevalent in other industries and with respect to many types of content. Problems similar to those faced by the music industry have arisen, or are likely to arise, in the context of other types of content.

Current digital distribution models in the music industry, for example, confine the consumer into artificial purchasing patterns, have only limited song selections, and are limited in terms of other available options. Moreover, these models generally limit how the consumer uses the content they pay for, and some of the models may fail to protect against infringement of rights in the underlying works.

### SUMMARY

Systems and techniques are provided for managing digital rights. The inventors recognized that existing techniques for protecting digital media and other content are inadequate and that processes can be implemented for licensing digital rights without materially impairing the ability of users to rightfully access digital media and other content. In addition, such processes can provide a mechanism to reward users for promoting and distributing such content.

In one general aspect, management of digital rights involves detecting a data file on a user device. The data file includes a digital wrapper preventing access to the data file without a valid authorization. A search is conducted for information relating to an authorization to access the data file using data stored in a non-volatile storage area of the user device. The digital wrapper is disabled if an authorization to access the data file is found during the search.

Implementations include one or more of the following features. The data file can be a media file. The search for information relating to an authorization to access the data file can be conducted in a license database on the user device. The license database can be located in the non-volatile storage area of the user device. The non-volatile storage area of the user device can be a basic input/output system (BIOS). The data stored in the non-volatile storage area of the user device can include a location of the license database and/or an access key for the license database, with the access key being necessary to access the license database. The license database can include an access key for the data file, with the access key being necessary to disable the wrapper. The search for information relating to an authorization to access the data file can be conducted in a license database associated with a remote server in response to a determination that a local database on the user device does not include information relating to an authorization to access the data file.

Identification data for the user device can be sent to the central server, and the identification data can be adapted to allow the central server to validate the user device. The identification data can include a digital key associated with the user device and/or a user associated with the user device. An authorization to access the data file can be offered for purchase, and an acceptance of the offer to purchase can be received. The digital wrapper can be disabled in response to the acceptance of the offer. The acceptance of the offer can be sent to a central server. A message from the central server can be received in response to the acceptance of the offer, and data contained in the message can be used to disable the digital wrapper. Identification data for the user device can be sent to the central server to allow the central server to validate the user device. The identification data can include a digital key associated with the user device and/or a user associated with the user device. Information relating to an authorization to access the data file can be stored on the user device. Access to the data file can be denied if an authorization to access the data file is not found during the search and if an offer to purchase an authorization to access the data file is not accepted. The search for information relating to an authorization to access the data file can include using executable instructions stored in the digital wrapper to determine whether the user device includes software for disabling the digital wrapper.

In another general aspect, a data file that does not include a digital wrapper is detected on a user device. The data file is identified using a file recognition algorithm. A search is conducted for information relating to an authorization to access the data file using data stored in a non-volatile storage area of the user device. Access to the data file is allowed if an authorization to access the data file is found during the search.

Implementations include one or more of the following features. The file recognition algorithm can include a digital fingerprinting detection technique. The data file can be a media file. The search for information relating to an authorization to access the data file can be conducted in a license database on the user device. The data stored in the non-volatile storage area of the user device can identify a location of the license database in a volatile storage area of the user device. The search for information relating to an authorization to access the data file can be conducted in a license database associated with a remote server. An authorization to access the data file can be offered for purchase. If an acceptance of the offer to purchase is received, access to the data file can be allowed. Information relating to an authorization to access the data file can be stored in a database on the user device in response to the acceptance of the offer to purchase. A digital wrapper associated with the identified file can be applied to the data file.

In another general aspect, proceeds are allocated in connection with the distribution of digital rights by receiving a data file on a user device and receiving a request to purchase a right to access the data file. The data file includes a digital wrapper including information relating to one or more distributors of the data file. The information relating to one or more distributors is extracted from the digital wrapper, and credits are allocated to the one or more distributors based on the extracted information.

Implementations include one or more of the following features. The digital wrapper can further include information relating to an assigned allocation of royalties associated with purchases of rights to access the data file. The extracted information can be a unique file identifier, and the distributor information and/or the royalty allocation information can be retrieved using the unique file identifier. The retrieved information can be retrieved from a central database located remotely from the user device. The request to purchase can be sent to a central server, and the allocation of credits can be stored in a database associated with the central server.

To participate in the allocation of proceeds in connection with a distribution of digital rights, a user of a device on which a data file is received is identified. The data file includes a digital wrapper including information relating to one or more distributors of the data file. The digital wrapper is modified to include information relating to the identification of the user. A detection of the data file with the modified digital wrapper then enables an allocation of credit to the user. The digital wrapper can be adapted to prevent access to the data file without a valid authorization. The data file with the modified digital wrapper can be sent to a device associated with a consumer, and a request to purchase access to the data file can be received from the consumer device. The digital wrapper on the consumer device can be disabled in response to the received request. Credit for the consumer purchase can be allocated among the one or more distributors. The information relating to the identification of the user can be a unique user identifier assigned by a central server.

In another general aspect, digital rights management is facilitated on a user device by collecting information relating to a user device, including unique identification data for the user device, from the user device, and generating a digital key using the collected information. The digital key is stored and encrypted, and the encrypted key is sent to the user device for storage on the user device. The encrypted key and information relating to the user deviceis subsequently received, and the user device is validated using the received encrypted key, the received information, and/or the stored digital key.

Implementations include one or more of the following features. Identification information relating to a user of the user device is collected, and the digital key is generated using the identification information relating to the user. The collected information is collected in accordance with executable code stored on the user device. The digital key is generated by and stored on a central server. The validation of the user device involves decrypting the encrypted key and comparing the encrypted key to the stored digital key. The validation of the user device can also involve generating a digital key using the received information relating to the user device and comparing the digital key to the stored digital key. Access to a license database and/or access to a digital file can be authorized in response to validating the user device. The unique identification data is extracted from a non-volatile storage area of the user device.

In yet another general aspect, an input/output system of a user device is monitored for attempted file transfers. An attempt to transfer a data file through the input/output system is detected, and a digital wrapper is applied to the data file before allowing the attempted transfer. The digital wrapper is adapted to prevent unauthorized access to the data file.

Implementations include one or more of the following features. The data file can be identified, and the digital wrapper can be applied based on the identity of the data file. The digital wrapper can be applied based on the identity of the data file matching an identification of the data file in a database on the user device. Identifying the data file can be performed using a file recognition algorithm. The digital wrapper includes information identifying the data file and information relating to an allocation of credits associated with purchases of the data file.

In another general aspect, a digital file is identified on a first user device, and the digital file is subject to a license in accordance with license information stored on the first user device. A request to copy the digital file from the first user device to a second user device is received, and information associated with the second user device, including unique identification data for the second user device, is obtained. The digital file is copied from the first user device to the second user device, and data identifiying the copied digital file and the second user device is stored on the first user device.

Implementations include one or more of the following features. The stored data on the first user device can be synchronized with a central database. A determination can be made that the requested copying of the digital file is authorized based on the license information. The license information is contained in a digital wrapper for the digital file. The license information for the digital file can be stored on the second user device.

In yet another general aspect, a media file is identified for distribution. Access rules, including information relating to usage rights and usage fees, associated with the media file are identified. A digital wrapper is applied to the media file. The digital wrapper includes identification data for the media file and data relating to the access rules and is adapted to prevent unauthorized access to the media file.

Implementations include one or more of the following features. The digital wrapper can be adapted to be disabled for use of the media file by a user that has a license to access the media file. The digital wrapper further includes information relating to one or more distributors of the media file.

In another general aspect, a media file is encoded with licensing information, and the media file is locked using a digital wrapper to prevent unauthorized access. The wrapped media file is loaded onto a user device. Instructions are installed on the user device to allow unlocking of media files. The instructions provide for identifying the media file and sending a message, in accordance with the licensing information encoded in the media file, to a remote server to obtain a license to use the media file. A license to access the media file is obtained from the remote server, and access to the media file on the user device is allowed using the license.

Implementations include one or more of the following features. The license to access the media file is stored on the user device. The license includes data for unlocking the media file.

In another general aspect, a centralized database is adapted to store identifiers for digital files and to store user licenses to use the digital files. A centralized server is operable to receive messages via a network from a remote device. Each received message includes a user identifier for a user and identification information for a digital file. The centralized server is further operable to process payment information for a license to use the digital file, to store information associating the license to use the digital file with the user, and to send licensing information for the digital file to the remote device. The licensing information is adapted to enable the remote device to allow use of the digital file by the user.

Implementations include one or more of the following features. The centralized server can be further operable to receive one or more digital keys from the remote device and to decrypt the one or more digital keys to validate an identity of at least one of the remote device and the user. The centralized server can be further operable to receive device-specific data from the remote device for use in validating the remote device. The remote device can be a server adapted to support streaming of digital files to a user device associated with the user. The remote device can store the licensing information. The remote device can be a user device associated with the user. The centralized server can be further adapted to receive information from the user device, generate a digital key associated with the user and/or the user device, and send the digital key to the user device,. The digital key can be adapted to enable access to the license information, a license database containing the license information, and/or the digital file. The licensing information can be data adapted for use in disabling a digital wrapper applied to the digital file.

The described techniques can be implemented as a method, in a system, or in an article including a machine-readable medium storing instructions for causing one or more processors to perform operations.

The details of one or more implementations are set forth in the accompanying drawings and the description below. Other features will be apparent from the description and drawings, and from the claims.

### DESCRIPTION OF DRAWINGS

FIG 1 is a flow diagram of a process for managing digital rights to a file that is loaded onto a user device, such as a computer.
FIG 2 is a block diagram of a representative system for managing digital rights.
FIG. 3 is a flow diagram of a process for installing, on a user device, software ("Solution Software") that controls access to protected files.
FIG 4 is a flow diagram of a process for wrapping content that arrives without any digital wrapper on a user device that includes the Solution Software.
FIG. 5 is a signaling and flow diagram of a process for generating a unique customer identifier for a user and/or a key that is specific to the user device.
FIG 6 is a signaling and flow diagram of a process for accessing a media file in a case where a user already has a license for the media file.
FIG 7 is a signaling and flow diagram of a process for accessing a media file in a case where a user does not have a license for the media file.
FIG 8 is a signaling and flow diagram of a process for copying or moving a media file from a user device to a secondary device.
FIG 9 shows a flow diagram of an illustrative process for performing a pass-along distribution.
FIG 10 is a flow diagram of a process for wrapping a media file.

Like reference symbols in the various drawings indicate like elements.

### DETAILED DESCRIPTION

The systems and techniques described here relate to a computer-implemented system for distribution and rights management of digital media files. The systems and techniques represent an end-to-end process that supports virtually any type of proprietary digital files including music and other recordings, movies and other video, books and other written works, and other files, such as those that pertain to the financial, legal, medical, gaming, and software industries. Although the following description focuses primarily on the use of the techniques in connection with music files, the techniques are equally applicable to other types of digital files. Similarly, although the techniques are described in the context of media files, the techniques may also be used in connection with multimedia files and other types of data files. The systems and techniques ensure that content owners are compensated for the distribution and use of their works and offer multiple levels of participation in the revenues generated by the sale and/or licensing of digital media.

The techniques work with media that arrives at a user's computer in a "wrapped" form (protected), as well with media that arrives "unwrapped" (i.e., unprotected). Media rights owners have the ability to wrap a file with information about ownership and payment. This information is given a unique file ID and is stored in a central database. The file ID is stored and transmitted with the wrapper. Songs or other forms of digital media without the wrapper may also be identified. Once a file is captured and identified by the system, the information such as owner and payment requirements can be retrieved (e.g., by matching the identified file with its unique file ID stored at the central database). Monitoring software provided in accordance with the described solution ("the Solution Software") may be automatically or manually installed on any computer or other device on which a user attempts to access a wrapped file. Once installed, all future media that passes through the file input/output (I/O) system of the computer can be identified either by using the file ID, if available, or using file identification software.

A user ID may be created for each user. The user ID may be stored along with device specific information in a secure area on the computer, such as the BIOS of the computer. The user ID may be stored in an encrypted or unencrypted format. This information may represent a user identification key, which may allow access to a local database of licenses and related permissions held by the user. By referring to this local license database, the Solution Software stored on the computer can determine whether the user is authorized to use a particular file and, if so, unwrap the file. Even if the file is not wrapped, access or use of the file may be allowed or prevented in accordance with business rules stored at the local database or at a central database level. For example, business rules may prevent certain types of files from being used unless a license is found in the local database while allowing the use of other types of files without the need for a license. Because users often have multiple devices, information about the user license may be centrally stored to ensure the user has access to all licensed media on more than one of the devices he/she owns.

A user may be defined as an individual or a set of related individuals, such as a family, members of a household, persons who access a shared private device, or a business entity. In addition, where information is described as being stored in a database, the information may be stored in multiple databases.

Files may be forwarded to other users and otherwise exchanged among users. However, if a file requires a license and the new users do not purchase the media file, the new users do not gain access to the file. To encourage distribution of the file, users are given an incentive to "pass along" (electronically send) media files or links to media files to others they feel would be interested in the media files (i.e., to potentially receive a portion of revenues generated by new purchasers). Recipients are given an incentive to purchase the media file (i.e., to be able to access the file) and also to further pass along the media file so that they too can participate in revenues. The number of levels of distribution in which participation in revenues is permitted can be unlimited. Typically, however, the number of levels of distribution in which participation in revenues is permitted will be limited. The number of levels of payment for a particular media file may be optionally established by the content owner and/or by a subsequent distributor of the media file. The maximum number of levels of payment and the rates for such payments may be established in the creation of the unique file ID for the media file along with the rates for payment. If the new user does not license the media file, he/she does not gain access to the file, although he/she may be able to pass along the file to other users for purchase.

A file may contain rules for purchase or transfer that require related files to be purchased or transferred with the file. For example, a song may require that it only be sold as part of a collection of songs such as an album. Another example would require that trailers, ads, or other related material accompany a movie or distributed TV show.

To support the ability to properly allocate revenues in accordance with a tiered-level distribution technique, the Solution Software on a user's computer may provide a mechanism whereby resellers and distributors can add their identification to a wrapped media file, which generally allows identification of resellers and distributors so that they can be compensated for sales where they were involved in the distribution channel. Each time a sales transaction occurs for a particular media file, identification information for users in the distribution channel may be extracted from the wrapped media file to determine who is entitled to share in the revenue. All transactions may be centrally tracked for payment and analysis. A central tracking database can be used to track payments for resellers, distributors (which may include users who pass along a wrapped file), and users who pass along a file that arrives without a wrapper. This latter situation can occur, for example, when a user shares a song that originated from a standard audio CD or DVD. The referring user's ID can be entered at the time of purchase so that the referrer and related resellers and distributors can be compensated.

Licenses for files may be recognized across multiple devices of a user. The methods and techniques described herein provide processes for managing, sharing, and moving licenses across multiple devices of a user.

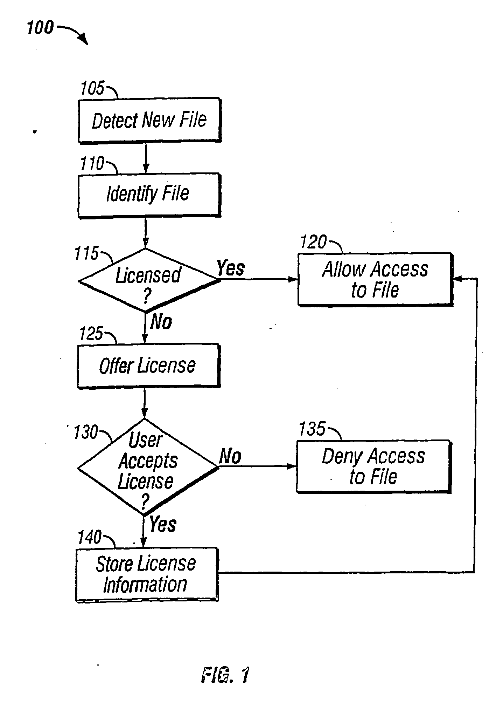

FIG 1 is a flow diagram of a process 100 for managing digital rights to a file that is loaded onto a user device, such as a computer. The user device includes software interfaces with the I/O ports for the device to monitor all file I/O, much like a firewall, which scans all inbound and outbound traffic for the computer and checks all files being moved into and out of the system. Files may be loaded onto the device using any type of I/O port, including a floppy drive, an Ethernet or LAN connection, a dial-up connection, a CD-ROM or DVD drive, a USB port, an infrared data port, a Bluetooth or other wireless connection, or any other mechanism and/or protocol for transferring data to and from the user device.

When the file is loaded onto the user device, the file is detected (step 105). The detected file is further examined using file identification software in an attempt to identify the file (step 110). For example, the file identification software may determine if the received file represents a known song or movie (e.g., in MP3, Windows media, or some other format). This file identification may be performed by software implementing the techniques described in Roberts, et al., U.S. Patent Application Publication No. 20030028796, filed July 31, 2002, Roberts, U.S. Patent Application Publication No. 20030046283, filed October 29, 2002, and/or Wells, et al., U.S. Patent Application Publication No. 20030086341, filed July 22, 2002, all of which are assigned to Gracenote, Inc. and all of which are incorporated herein by reference. This technology extracts a digital fingerprint from a digital file and compares the extracted fingerprint to a database of known works. More specifically, this technology can use algorithms to detect a media file type and a likelihood that the media file is of interest (e.g., represents a potentially protected work). Generally, these algorithms examine internal attributes of the file, instead of simply identifying the file type based on the file extension. Media files that are determined not to be of interest may be allowed to pass without further analyzing the file.

If the media file is found to be likely to be of interest, additional algorithms are used to identify the specific media file (e.g., the specific song, movie, photo, written work, etc.). Fingerprinting data that allows the specific media file to be identified may be stored at a central server and accessed using an Internet connection. Some files may be of a relevant file type but may not be recognized (e.g., if the media file represents a recording generated by the user or if access to a central database of digital fingerprints is not available). Access to such a file may be allowed without restriction, but the file may be flagged as unrecognized (e.g., by storing an indication on the user device that the unrecognized file has been accessed), which allows faster processing in the future and allows the Solution Software to potentially identify the media file at the time of a later use if the media file is subsequently catalogued or otherwise identified (e.g., when an internet connection to the central digital fingerprint database becomes available). If the file is subsequently identified or catalogued and is subject to restrictions, a stored indication that the unrecognized file was accessed may be used to require purchase of a license to continue using the file or to otherwise collect license fees for use of the file. In some implementations, data for a limited number of media files (e.g., the 2000 most popular song files) may be stored locally on the computer for quick access. The locally stored fingerprinting data may be periodically updated from the central server (e.g., as the popularity of song files changes).

The file identification techniques described above allow for accurate identification of the file even if someone has attempted to disguise the file (e.g., by changing the file name, extensions, or other attributes) and regardless of whether the file is received in compressed or uncompressed form (e.g., using standard practices for reading compressed information). Such techniques offer a very low error rate of less than 2% (less than 1% false negatives and less than 1% false positives).

Other file identification techniques may also be used, such as watermarking and fingerprinting techniques, as are known in the field of digital rights management. In some cases, it may not be necessary to identify the file using complex file identification techniques. Instead, the file may be identified based on a file name or using file ID attributes, which may be contained in or with the file and may be designed to be tamper-resistant. For example, if the media file is wrapped, the file identification software may operate to detect the wrapper and read file ID information embedded in the wrapper. Thus, files can be identified using implicit characteristics of the file (e.g., a fingerprint or watermark) or using explicit file characteristics (e.g., a file identifier stored in a file header).

Once the file has been identified, a determination is made as to whether the file has been licensed for use on the user device and/or by the particular user (step 115). This determination may be performed by referring to one or more license databases, which may be stored locally (e.g., on the user device) and/or remotely (e.g., at a central server). To ensure that the license information in the license database is valid, one or more special keys may be used to access the information, unlock the license database, and/or to validate the user, the user device, and/or the license on the user device itself or by communicating with a central server, as discussed in greater detail below. If the file is licensed, the user may be allowed to access the file (step 120), which may involve, for example, unwrapping the file, playing a song or movie contained in the file, storing or otherwise using the file on the user device, or streaming the file to the user device over a wireless or wired connection. The license may specify what type of access or use of the file is permitted.

If the file is not licensed, a license may be offered to the user for purchase (step 125). For example, the user may be directed to a website where a purchase can be made, or a pop-up window may appear on a display screen for the user device asking whether the user wishes to purchase a license to the file or otherwise accept certain license terms and/or the user may be directed to a website where a purchase can be completed. Alternatively, the user may have a service that allows for pre-purchasing of a certain number of credits that may be applied to license purchases. As another alternative, the number of unlicensed media used in a particular period may be monitored locally by the Solution Software or other software, and this information may be subsequently used to calculate usage fees or rates. The license terms, such as duration, use and distribution limitations, and payment options, may also be displayed as part of the offer of a license for purchase. It is then determined whether the user accepts the license (step 130) (e.g., by receiving an indication that the user clicked on an accept button or a decline button in the pop-up window). If the user does not accept the license, access to the file may be denied (step 135). If the user does accept the license, including complying with any payment terms, the user is allowed to access the file, and license information, indicating that the file has been licensed and any other necessary information, is stored in the license database(s) (step 140).

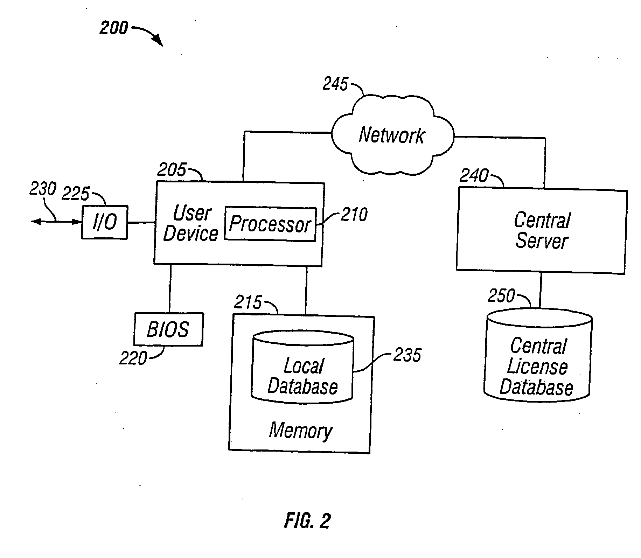

FIG. 2 is a block diagram of a representative system 200 for managing digital rights. A user device 205 includes a processor 210, which may execute instructions stored in a memory 215 and/or other storage mediums (not shown) that may be connected to the user device 205. The user device may include a BIOS (basic input/output system) 220 or some other non-volatile memory that stores basic information about the user device 205. The user device 205 may include one or more I/O ports 225 that permit files and other data to be moved and/or copied onto and off of the user device 205 (as indicated at 230). The processor 210, in accordance with instructions stored in the memory 215, may monitor files and other data that pass through the I/O port 225 for purposes of identifying protected (e.g., copyrighted) music, video, software, or other files.

The memory 215 may include a local database 235 that stores license information for files that are licensed to be used on the user device 205 or by one or more users. Access to the local database 235, or to the information contained in the local database 235, may require the Solution Software to decrypt and use one or more keys stored in the BIOS 220. Such keys may be unique to the user and/or the user device 205, and the process for accessing the local database 235 may be such that the keys and/or the license information stored in the local database 235 are only valid for the particular user device 205. For example, if a user attempts to make an unauthorized copy of the key(s) and/or the license information on an alternative device, access to the files that are licensed on the user device may be denied on the alternative device unless a new unique key is generated for, and license information is stored on, the alternative device. License information on a particular device may be updated at a future date, updating usage rights or removing access to a file or files. One example where the capability to perform such an update is desired is de-licensing an old computer.

The user device 205 may communicate with a central server 240 through a network 245, which may include one or more of a wireless network, a LAN, a WAN, the Internet, a telephone network, and any other network for transferring data. Communications between the user device 205 and the central server 240 may be performed using a secure channel, such as the Secure Sockets Layer (SSL), and/or may use encryption, such as PGP. The central server 240 may provide services that support the digital rights management system 200, such as generating keys using, at least in part, information communicated from the user device 205 over the secure connection and validating keys and license information periodically or when attempting to license new media. In addition, the central server 240 may provide access to a central license database 250 that stores and identifies licenses held by individual users and that stores key validation information. Storage of license information in the central license database 250 provides redundancy (e.g., in case there is a corruption of a volatile memory area of a user's device), allows a re-creation of a licensed data environment on another device, allows for transfers of licenses between a user's devices, allows for remote access of license information by the user using a device without a volatile memory area (e.g., some types of cell phones), and allows streaming of licensed digital files.

For some types of user devices 205, such as some cellular phones, some of the functions may be performed by components that are remote from the user device. Some cellular phones, for example, may not have the memory capability to store files and license information locally or, depending on the application, it may be otherwise undesirable to do so. In such a case, digital files (such as but not limited to music or video) may be streamed to the user device over a wireless connection. The local database 235 may be located in the wireless network and the processing that determines whether the user device has a license to access particular files may also be performed on a server in the wireless network.

In many situations, the local database 235 is local to the user device 205. In some cases, however, the local database 235 (along with other storage capabilities) may be located on a network drive or other external storage. In the event that a network drive or external storage is mapped or connected to the user device 205, an additional piece of information may be used to fully secure the digital files. In particular, it may be desirable to describe the data that is written to the network drive or external storage to track the storage location. In addition, it may be desirable to identify the devices and/or users that have access to the local database 235.

When the local database 235 is created for a user and the location data is written to the BIOS, information may also be written to the network drive or external storage. The information written to the network drive or external storage identifies the user devices or machines that connect to the network drive or external storage using a unique user ID and/or device ID. For example, in the case of a family-shared server or other shared network server situation, the drive may have multiple user and/or device IDs (or a combination of the two) stored in an encrypted file on the network drive or external storage. When a new machine connects to the drive, identification information for the new machine is added to the encrypted file on the network drive or external storage. This identification information may be tracked centrally (e.g., at the central server 240 or central database 250) to prevent a situation where an excessive number of users or machines are using the same media, thus violating the licensing rules for the media.

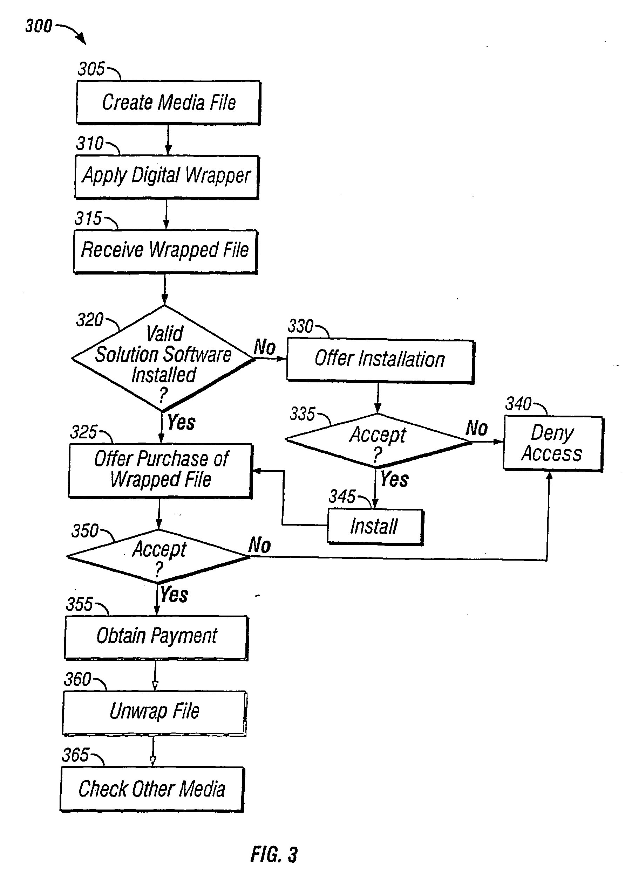

FIG 3 is a flow diagram of a process 300 for installing, on a user device, software ("Solution Software") that controls access to protected files. The Solution Software may perform a number of different functions, including gathering information for generating keys, communicating with the central server, monitoring the file I/O system, storing and retrieving license information from the local database, identifying files (e.g., using the Gracenote or other technology), wrapping and unwrapping files, and facilitating the purchase of licenses. The Solution Software may be installed on a user device in a number of different ways. Traditional download and software install processes are one way for the Solution Software to be installed. The installation process can be initiated when the user device receives wrapped files. Other potential installation processes could involve seeding current peer-to-peer networks with songs wrapped by the Solution Software, sending the Solution Software, or a link to a server that stores the Solution Software, using instant messaging or emailing, and other alternatives. The process 300 illustrated in FIG 3 illustrates an installation initiated as a result of receiving a wrapped file.

Initially, a data file is created (step 305). If the data file is a song, for example, the creation of the data file may include an artist recording a song and the artist, label, and publisher working together to create a song that is ready for distribution. Alternatively, an independent artist may self produce and publish a song for distribution. The song may subsequently be "ripped," which involves taking a song from a digital source such as a CD or DVD or an analog source and encoding the song into an MP3 file, Windows Media file, Real Player file, or other media format for playback on a computer or music/media player device.

A digital wrapper may then be applied to the media file (step 310). The content owner (e.g., the record label, publisher, or independent artist) or someone else in the distribution chain may apply, adjust, or enhance the digital wrapper to the media file. The digital wrapper may include attributes such as a title, author/artist, and volume/collection along with business rules specifying ownership, usage rights, royalty fees, and pass-along payout levels (i.e., commissions that will be paid to individuals along the distribution chain). This combined information is given a "Unique File ID" (UFID) and may be stored in a central database (see FIG 2). The UFID is included in the wrapper during any and all transmissions and is used as a mechanism to identify the media file and to trigger specific functions like copyright owner payment events, file usage database updates, and micro-payment fee allocations for consumer pass-along activities. The Solution Software may include processes for verifying the integrity of a file and its UFID to prevent UFID and wrapper tampering. For example, the file recognition techniques discussed above with respect to files that do not include a unique embedded ID may be used to "recognize" the file by generating a derived ID. The derived ID may then be checked against a corresponding stored ID to ensure that the file and its unique embedded identifier have not been subject to tampering.

In addition to information about the media file, the wrapper prevents unauthorized access to the media file. In other words, the wrapper prevents access to the media file unless the user has purchased a license. In essence, the wrapper places the file in an encrypted form that requires a key to be able to access the underlying media file. Conventional digital wrappers that are typically used for protecting software applications as they are distributed electronically may be used as a wrapper for the media file. For example, the wrapper may be of the same type as the ecommerce wrapper available from Digital River, which has been used to distribute software such as Norton Antivirus from Symantec Corporation and Aladdin Software's Privilege system. Once the user purchases a license for himself or for the device, a key is used to unwrap the media file. The key may be received from the central server.

Typically, all communications between the user device and the central server occur with two levels of encryption. First, transmissions are encrypted via SSL/TLS (Secure Sockets Layer/Transport Layer Security also known as Secure HTTP). Second, transmitted keys are secured via public and private key pairs and a symmetric key. A certificate specific to the user's device may be issued to the user device at installation to ensure the computer can be trusted for communication by the central server. The certificate indicates that the sender is who it says it is. The central server can then send its public key to the sending computer. The sending computer encrypts the information it wishes to transmit with a symmetric key and then encrypts the symmetric key with the public key of the central server. The central server uses its private key to decode the symmetric key and then uses the symmetric key to decode the received information. Examples of symmetric key algorithms include DES (digital encryption system), 3DES (Triple-DES), and simple cipher transcription algorithms. A popular example of a key pair encryption algorithm is PGP (Pretty Good Privacy). The methodology described can be used in reverse to send information from the central server to the user's device.

In general, each media file may have a corresponding unique key, or a particular key may be shared among two or more media files. To improve security, the specific encryption method used may be unique to each file. Thus, multiple encryption techniques may be used, and the wrapper may include an encryption technique identifier to inform the Solution Software of which decryption technique to use for unwrapping the file. The wrapper may also include an executable component that runs whenever a user tries to open the wrapped file. Among other things, the executable component determines whether a valid installation of the Solution Software exists on the user device.

Note that the license database local to the device can be encrypted. This encryption typically uses a symmetric key algorithm as described above. To improve security, layers of security can be added (also described above) and the encryption scheme may be changed from time to time in communication with the central server. The described techniques utilize combinations of data and encryption seed values to generate the symmetric keys. Elements of these encryption seeds include information specific to the local user and/or device, including information that is bound to the device's hardware and non-volatile memory. This enhances the system's ability to make the encryption specific to the local machine. In this way, encryption and identification keys generated for a system cannot be used on another system.

Wrapped files are typically encrypted using symmetric keys as described above. The encrypted contents are stored within the executable wrapper. Accordingly, keys may be used for a variety of different security functions, including protecting (i.e., locking) and unlocking a wrapped file, locking and unlocking a local database, protecting communications between the user device and the central server and/or central database, authenticating the user, authenticating the user device to the central server, and authenticating the central server to the user device.

A user device may subsequently receive the wrapped file (step 315) through a physical or electronic media distribution technique. For example, a user may receive the wrapped file on his computer from a peer-to-peer platforms such as Morpheus, KaZaA, Napster, Grokster, etc.; in an email received from another person; through a file access and download process (FTP or HTTP) from a web site, telephone or satellite network, whether or not the site is a legitimate distributor of the digital content; in a. person-to-person file sent via instant messaging or other direct connect methods; or via other media, such as network connection, CD-ROM or CDR, DVD-R, Zip disk, and the like.

When a user attempts to open or otherwise access the wrapped media file (e.g., by double clicking on the file), the executable component of the digital wrapper determines whether a valid installation of the Solution Software already exists on the user device (step 320). During installation of the Solution Software, the central server creates a unique key, which may include a "Unique Customer ID" (UCID) associated with the user and/or a device key. The unique key is generated by combining, according to a predetermined algorithm, a number of data types, which may include device specific information, data gathered from user input, data generated by the Solution Software or central server, and local database access and location information. The data, or at least some parts of the data, is generally sent to the central server from the user device, and the central server uses the received data to generate the unique key. The central server then encrypts this information and sends the information back to the user device where the information is stored in a secure, non-volatile area on the user device, such as the BIOS. Among other things, the unique key allows the central server to recognize the consumer, enabling the user to use licensed data files and receive payment for "promoting" (pass-along) files to other consumers. The presence of the unique key on the user device, along with the executable Solution Software and supporting files, thus indicates that a valid installation of the Solution Software exists on the user device. If the unique key is present but the user has removed all or part of the software and supporting files, on the other hand, a reinstallation of the Solution Software is necessary.

Accordingly, when a user attempts to access the wrapped media file, the Solution Software checks the BIOS for a valid unique key by conducting a memory read of the BIOS data tables, which may be written to the SMBIOS (also known as DMI) standard (as defined in the "System Management BIOS Reference Specification version 2.3 (Section 2.1 - Table Specification)", where the unique key is written when the Solution Software is installed. If the unique key is not found, the executable component of the wrapper determines that the Solution Software is not yet installed. If a unique key is found in the BIOS, the unique key is read and verified with the central database to ensure the found unique key is valid. The central database decrypts the unique key and calculates and verifies a checksum. As an alternative to using a checksum, other verification methods, such as the inclusion of an additional key or handshake token in the exchange between the client device and the central server, may be used. In some situations or implementations, verification of the unique key's validity may be performed by the Solution Software on the user device. If the unique key and checksum do not match, the executable component of the wrapper determines that valid Solution Software is not currently installed. If the unique key and checksum do match, it is determined that a valid installation exists. In some implementations, such as where the local system has limited processing resources (e.g., in a cell phone), the process of checking for a valid installation may be performed at the central server.

In addition, if the unique key indicates that a valid installation exists, the Solution Software located on the user device may be validated against unique identification information for the Solution Software that is included in unique key stored in the BIOS. For example, the unique key stored in the BIOS may include a checksum and version for the Solution Software, which may or may not be stored in an encrypted form, that are compared to a checksum and version for the Solution Software located on the user device. If this information does not match, the executable component of the wrapper determines that valid Solution Software is not currently installed. Otherwise, a valid installation is recognized.

Although not illustrated in FIG 3, there may be situations in which the wrapped file is already licensed (i.e., a license to access the file is already stored in a local or central license database) or the file, without the wrapper, already exists on the user device (e.g., the file was ripped onto the user device from a CD before the Solution Software was installed on the user device). In the latter case, it may be presumed that the user is entitled to a license to access the file. To determine if the file already exists on the user device, it is generally necessary to scan the storage devices connected to the user device to discover what files exist on the user device. The handling of files that are already licensed on the user device or that are already present on the user device are further discussed below.

If the executable component of the wrapper determines that valid Solution Software is not currently installed, an offer to install the Solution Software is presented on the user device (step 330). The offer may be presented, for example, in a pop-up window. It is then determined whether the user accepts the offer to install the Solution Software (step 335) (e.g., by receiving an indication that the user clicked on an accept button or a decline button in the pop-up window). If the user does not accept the offer, the Solution Software is not installed and access to the wrapped media file is denied (step 340). If the user accepts the offer, the Solution Software is installed (step 345) from a central server that stores the Solution Software code or from code included in the wrapper.

Once the solution software is installed at step 345 or if the executable component of the wrapper determined at step 320 that a valid installation of the Solution Software already exists (and assuming the wrapped media file is not already licensed by the user and/or on the user device), an offer to purchase or license the wrapped media file is presented on the user device (step 325). Alternatively, the user may be directed to a website where a purchase or license of the file can be completed. It is then determined whether the user accepts the purchase or license offer (step 350). If not, access to the wrapped media file is denied (step 340).

In some implementations, installation of the Solution Software may not occur until after presenting the offer to purchase or license the wrapped media file at step 325 or even after the user accepts the purchase or license offer at step 350. Accordingly, an offer to purchase or license (step 325) the wrapped media file may be presented on the user device regardless of whether a valid installation of the Solution Software is found on the user device at step 320 and before a copy of the Solution Software is installed at step 345. In such a case, the Solution Software may be installed, without requiring a separate offer and acceptance for the Solution Software, at about the same time as, or after, determining whether the user accepts the purchase or license offer at step 350. Accordingly, step 345 may be performed roughly concurrently with step 350 or after step 350, and steps 330 and 335 may be omitted. As another alternative, steps 330 and 335 may be performed at some other point during the process 300.

If the user accepts the purchase or license offer, payment information is obtained from the user and sent to the central server (step 355). The central server may include a micro-payment system that tracks the sale of the media file license and also all the parties to be paid for each specific sale, as further discussed below. If this purchase is the first time the user has purchased a media file, the billing information including payment method and related information as well as address and phone contact information are entered. Otherwise, the user may have the option to log in and use a previous payment method or to enter a new payment method.

The payment method is processed. If the payment fails, the user can enter a different payment method and try again. If the user chooses not to try again or if no payment method offered is validated, the transaction is cancelled and access to the media file is denied. Assuming payment is successful, however, the media file is unwrapped (step 360) and license information may be stored, as appropriate, in a local database and/or a central database.

Once the Solution Software is installed on the user device, the Solution Software may check all media on the user device (step 365) to determine whether any of the media files represent protected content. This check may be performed by scanning the contents of the user device's memory and using a file identification technique to identify known media files. Recognized media files may then be wrapped to enable the user to promote and sell his/her own cataloged library, as further discussed below. In specific implementations, the media files may be wrapped upon recognition or may not be wrapped until a user attempts to send the file through the I/O system of the user device. In addition, the user may be required to purchase a license for any recognized content for which the user does not already possess a license. In some implementations, however, it may be undesirable to require purchase of a license for files that already reside on the user device when the Solution Software is installed because it may not be possible to determine if the user legitimately possesses the file (e.g., if the user previously paid for the file before the Solution Software was installed on the user device). Files that already exist on the user device, however, may be wrapped upon transfer to another device and/or another user.

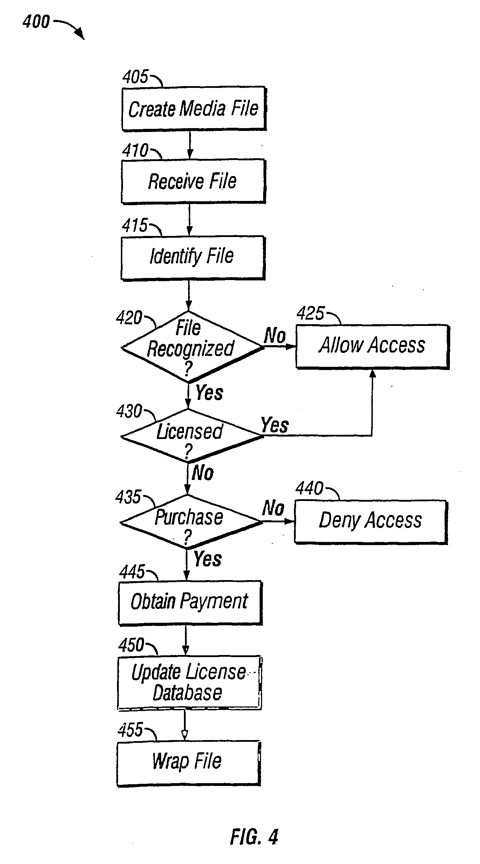

FIG. 4 is a flow diagram of a process 400 for wrapping content that arrives without any digital wrapper on a user device that includes the Solution Software. Initially, a media file is created (step 405), as described above in connection with FIG 3. The media file is subsequently received on a user device that includes the Solution Software (step 410) through a physical or electronic media distribution technique. The Solution Software monitors the file I/O system and thus recognizes the receipt of the media file. Using a file identification technique, the Solution Software attempts to identify the media file (step 415) by, for example, extracting a digital fingerprint from the media file and comparing the fingerprint with fingerprints of known media files. A determination is made as to whether the media file is recognized (step 420). If not, it may be assumed that the file is not protected by copyright or otherwise, and access to the media file may be allowed (step 425).

If the file is recognized, it is determined whether the media file has already been licensed for use on the user device and/or by the particular user (step 430). In general, when a file is recognized, the file identification techniques will identify an existing UFID associated with the media file. To determine if the media file is licensed for use on the user device, the Solution Software may determine if the UFID is stored in a local database that contains UFIDs for licensed media files. In some cases, the user may have a license to the media file but the license information may not be stored on the user device. For example, the user may have purchased a license using a different device. Assuming the business rules for the media file do not limit use of the media file to a particular device (i.e., the device on which the media file was originally licensed) or otherwise preclude use of the media file on the current user device, access to the media file may be permitted. Accordingly, if the UFID is not found in the local database, a central database may be checked to determine if the user has a license for the media file.

If it is determined that the media file is licensed, access to the media file may be allowed (step 425). In some cases, it may be determined that a valid license exists, and access to the media file may be allowed, even if the file is not contained in a license database for the user. For example, if the file is being loaded onto the user device from a compact disc (CD), the Solution Software may be able to recognize whether the CD is factory-produced and, if so, may be programmed to assume that the attempt to copy the file is legitimate or permissible. Accordingly, the Solution Software may allow copying of files from an original CD and may store license information for files that are copied from an original CD (see step 140 of FIG. 1). However, the Solution Software may also be programmed to prevent further copying of a file that is received from a CD. In particular, the Solution Software may wrap a file that is copied from a CD, either at the time that the file is recognized or upon detecting that the file is being transferred through the I/O system for the user device.

If the media file is not licensed, the user may be offered the opportunity to purchase a license to use the media file (step 435). If the user opts not to purchase a license, access to the media file may be denied (step 440). If the user decides to purchase a license, payment information is obtained from the user and sent to the central server (step 445). Assuming payment is successful, license information for the media file may be stored, as appropriate, in a local database and/or a central database (step 450). The media file may also be wrapped for further distribution (step 455), which ensures that the media file is licensed and that the appropriate fee distributions are made before others can access the media file. As discussed above, the media file may be wrapped immediately. Alternatively, the media file may remain in an unwrapped form on the user device and be wrapped only when a user attempts to send the media file through the I/O system for the user device.

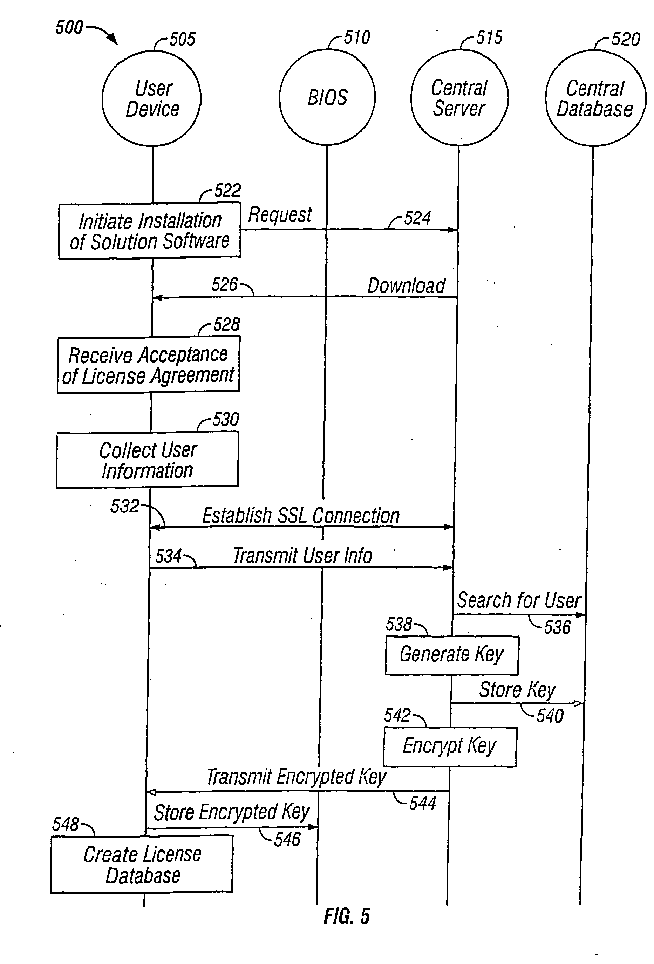

FIG 5 is a signaling and flow diagram of a process 500 for generating a UCID for a user and/or a key that is specific to the user device. In general, each user will have a single UCID and each user device will have its own specific device key. The UCID may be used for identifying the user for purposes of accessing the user's license information stored at the central server, tracking the source of files for purposes of identifying payments (i.e., when a user has added his/her UCID to a file wrapper and distributed the file to other purchasers), and for identifying certain user devices as belonging to a particular user. The specific device key may be used for unlocking and/or accessing the local license database as well as allowing the central server to identify the specific device. The UCID and the specific user device key may also be merged into a combined key by simply appending one to the other or by intermixing the keys according to some type of coding algorithm. A combination of the UCID and the specific user device key may be used for distinguishing among the specific user devices that belong to a particular user (e.g., so the central server can keep track of which devices on which a licensed file resides).

The process 500 involves operations on and communications between a user device 505, a BIOS 510 for the user device 505, a central server 515, and a central database 520. An installation of the Solution Software on the user device 505 is initiated (step 522). As a result, the user device 505 sends a request 524 to the central server 515 for the Solution Software. In response to the request 524, the Solution Software is downloaded 526 from the central server 515 to the user device 505. Instead of sending a request 524 and performing a download 526, the Solution Software may be loaded locally (e.g., from a file located on the user device 505 or from a disk). The user may be prompted to accept the terms and conditions of a license agreement for the Solution Software, and acceptance of the license agreement may be received (step 528).

The Solution Software that is loaded onto the user device 505 includes executable code necessary to collect certain user-related information (step 530). Some of the information may be collected automatically while other information may require manual input by the user. For example, the user may be prompted to enter a unique user name or "handle," a password, an email address, and other user input information. This information may be used to access the user's license and other information stored in the central database and/or to access a local database specific to the user on a user device 505 that may be shared by multiple users. Information that is automatically gathered may include device specific information (e.g., System Universal User ID, CPU ID, MAC address, BIOS boot block) and access and location information for the local database.

The Solution Software that is loaded onto the user device 505 also includes executable code necessary to establish a connection 532 between the user device 505 and the central server 515. Typically, an Internet connection between the user device 505 and the central server 515 is made automatically. If automatic connection is not possible, a manual process is started to prompt the user to initiate a connection (using a modem, network, etc.). If no Internet connection is made, the installation aborts, in which case the information gathered at step 530 may be stored for a subsequent attempt to install the UCID and specific device key when an Internet connection is available. Installation of the Solution Software may similarly be aborted at steps 522, 524, & 526 in cases where the Solution Software is installed from the central server 515. The Internet connection is made via a secure channel such as Secure Sockets Layer (SSL).

Information sent to the central server 515 may be sent on this secure channel, and the information may have additional encryption applied to it (e.g., using PGP in addition to the encryption provided by the SSL connection). Messages sent to the central server 515 may be responded to with a success or fail code. Messages sent which receive no response in a programmatically determined reasonable timeframe may be assumed to have failed. Using the established connection, the user information collected at step 530 is transmitted 534 to the central server 515.

The central server 515 may search 536 the central database 520 to see if the user is already known. Determining if the user is already known may involve a comparison of one or more of the data items of user information to known data items stored in the central database 520. For example, if the user name is already in the central database 520 but the password does not match, the user may be prompted to log in with the correct password and/or notified that the user name is already in use.

If the user is not already known, the central server 515 generates a UCID and/or a device key (step 538). The UCID and the device key may be generated by combining a selected number of data items, which may be selected from among a various available data items including the received device specific information, the received user information gathered from user input, the received access and location information for the local database, data generated by the central server 515, and information regarding the date and time of, or other information about, the transaction. As discussed above, the UCID may be combined with the specific device key to create a combined key. Which data items are used and how the data items are combined may be defined by algorithms stored in the central server 515. By generating the UCID, device key, and/or combined key at the central server 515, the algorithms for generating the UCID, device key, and combined key may be kept secure, which may help prevent users from being able to generate counterfeit UCIDs, device keys, and combined keys. In addition, reverse engineering of the UCID, device key, and combined key and/or the algorithm for producing the UCID, device key, and combined key may be further prevented by using less than all of the user information received from the user device 505 and/or randomly selecting some of the data items to be used in generating the UCID and by encrypting the UCID before sending the UCID to the user device 505.

The UCID, device key, combined key, and/or additional machine specific information, along with the other user information, is stored 540 in the central database 520. The UCID, device key, and/or combined key are also encrypted (step 542), and the encrypted UCID, device key, and/or combined key are transmitted 544 to the user device 505, which stores 546 the encrypted UCID, device key, and/or combined key in the BIOS 510. The keys may be split into parts and the different parts of the keys may be stored at separate locations in the BIOS. The UCID, device key, and/or combined key may represent a public key that subsequently may be used to encrypt messages between a client machine and the central server. A local license database is created on the user device 505 (step 548). For example, a portion of the Solution Software code is run to create an encrypted license database on the user device 505. By encrypting the database and/or the information stored in the database, it is possible to prevent the information contained in the database from being readable unless the appropriate keys are used. Generally, the license database is created on a hard drive of the user device 505 with a location pointer stored in the BIOS 510, but the license database may also be created in the BIOS 510. The encrypted UCID and the device key and/or combined key, which may include one or more location pointers, are written to the BIOS using an industry standard process, such as Desktop Management Interface (DMI), for storing extended data structures.

Consumers often have multiple devices and want to be able to use licensed files on the various devices. In some situations, therefore, the process 500 may be initiated on a new device but by a user who already has a UCID. Based on the UCID, a user name and password, and/or other identifying information, the central server 515 may determine that the user is already known during the search 536. The user may still be able to install the Solution Software on other devices and login with his/her user name and password. The central server 515 may generate a new device key without having to generate a new UCID (at step 538) and update the combined key with the new device information. Thus, the combined key may include the UCID along with device specific information (e.g., specific device keys) for all devices owned or used by the user.

When the combined key is received by the central database, the combined key may be unencrypted by the central server to identify the user (using the UCID portion of the combined key) and to determine whether the user device is a new device or a known device for the user (using the device specific information contained in the combined key). If the device is a new device, the new device may be added to the list of known devices for the registered user, and the device can then use data files based on license permissions for the individual files (e.g., the number of different devices on which a media file may be used without purchasing an additional license). The UCID and/or the updated combined key (as well as a new device key) may also be added to the BIOS of the new device so that the device may be associated with the specific user. The UCID and/or the updated combined key may also be added to the BIOS of the user's other devices the next time those devices connect to the central server. A specific device may also be associated with multiple users, in which case each user may have a separate license database and the separate license databases may be distinguished using a user name and password. Additionally, a device without the Solution Software but that is authorized to communicate with a license library in the local database or the central database 520 could be permitted to use licensed files based on the license information located in the license library.

In some situations, users may be permitted to access licensed files on a temporary basis using, for example, borrowed devices. For instance, a user may want to listen to a music file while at a friend's house. In such a case, the device may be temporarily added as an additional device (e.g., with an expiration date/time), the file may be granted a temporary license on the device, or the file may be provided to the device in a streaming format. To prevent users from allowing others to access their licenses, however, users may be limited to one concurrent login at a time and/or such temporary licenses may be granted for a limited time or to only one device at a time.

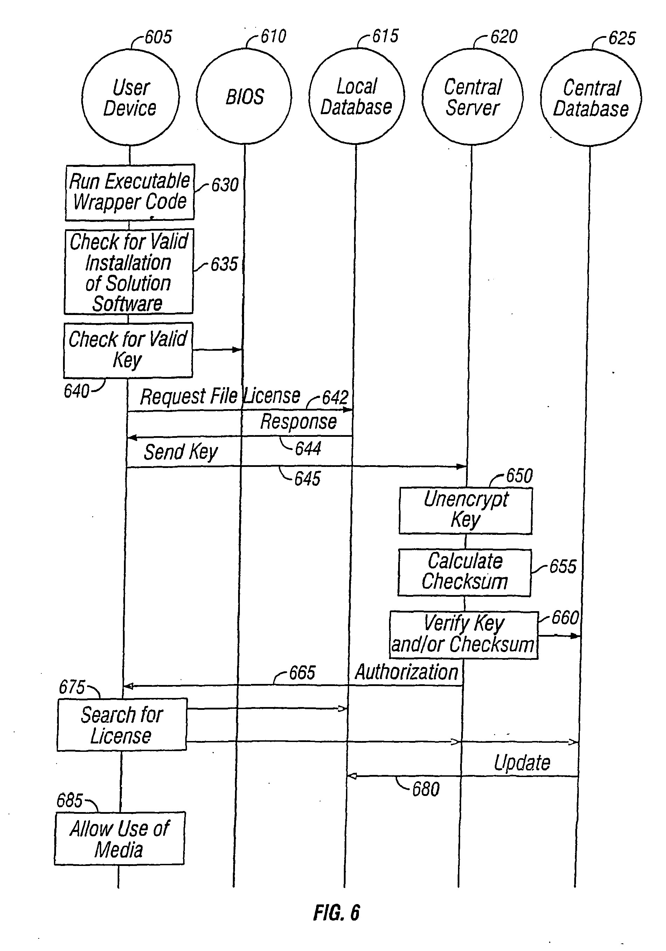

FIG 6 is a signaling and flow diagram of a process 600 for accessing a media file in a case where a user already has a license for the media file. The process 600 involves operations on and communications between a user device 605, a BIOS 610 for the user device 605, a local database 615, a central server 620, and a central database 625. The user device 605 receives a wrapped file as in step 315 of FIG. 3. When the user attempts to open the wrapped file, executable wrapper code is run on the user device 605 (step 630). The executable code may cause the user device 605 to first check for a valid installation of the Solution Software (step 635). Assuming a valid installation is found, the executable code may cause the user device 605 to check for a valid UCID, device key, and/or combined key in the BIOS 610 (step 640), which may involve a memory read of the DMI tables where the key is written when the Solution Software is installed.

If a valid UCID, device key, and/or combined key are found, the Solution Software on the user device 605 may check for a license to the wrapped file in the local database 615 by sending a file license request 642. This search may be conducted by identifying the media file's UFID, which is contained in the digital wrapper, and trying to locate the UFID in the local database 615. The local database 615 may be unlocked by comparing unique machine information from one or more keys stored in the BIOS with the actual unique machine information. If the information matches, the Solution Software can then decrypt the local database to read license information. If the information does not match, the keys may be designed such that an attempt to decrypt the local database will be unsuccessful (e.g., to thwart unauthorized copying of the license database to a different device), in which case it may be necessary to contact the central server 620 to obtain authorization or to register the user device 605 (see FIG 5). Decrypting the local database 625 and/or the license information contained in the local database 625 may be performed using a digital key stored in the BIOS to unlock the local database 625 or its content.

Assuming the local database 625 is successfully decrypted, a response 644 containing the necessary license information or an indication that the file is not currently licensed on the user device 605 is returned to the user device 605. If the license information is returned, access to the file may be allowed (step 685). Otherwise, it may be necessary to access the central database 625 to determine if the user device 605 is an authorized device and/or to determine if a valid license exists. Each time the central server 620 and/or central database are accessed, it may be necessary to test the keys stored on the user device against information stored in the central database 625 to ensure that the communication involves a valid, authorized user device 605. The following steps describe testing of a combined key. Although a combined key may be used, other implementations may use a UCID, a device key, and/or other information. If a combined key is found in the BIOS 610, the found key is sent 645 to the central server 620 for verification along with additional machine specific information (i.e., the information or some of the information originally used to generate the combined key). The central server 620 decrypts the received combined key to retrieve the UCID (step 650) and embedded device information. The central server may additionally calculate a checksum for the unencrypted combined key (step 655). The central server then verifies the unencrypted combined key against information stored in the central database (step 660). Verifying the combined key may include calculations with the checksum. If the unencrypted combined key, UCID, and machine information match the information stored in the central database, an authorization 665 to proceed is sent to the user device 605 indicating a successful verification of the combined key. If the combined key is counterfeit or copied from another device, the machine specific information sent along with the combined key will not match the information contained in the unencrypted key and the information stored in the central server.

In response to the authorization 665, which may be used once per session when connecting to the central database 625, the executable code causes the user device 605 to search the local database 615 for a license to the media file (step 675) by trying to locate the UFID for the media file in the local database 615. In some cases, this search may be successful even though the original search (at 642) was not if, for example, the key information stored locally became corrupted but is updated through the authorization 665. If the UFID is not found in the local database 615, the central database 625 may be searched for the UFID. If the UFID is found in the central database 625, the local database is updated 680 with the license information. Assuming a license is located, use of the media file is allowed (step 685). For example, the Solution Software may allow a media player application to access a requested music file. In some implementations, once a media file is allowed to be used on a particular user device 605, the media file is stored on the user device 605 in an unwrapped form. The wrapper is only reapplied by the Solution Software when the software detects that the media file is being copied or moved from the user device 605 to another device or storage medium, which may be determined through monitoring of the file I/O system as discussed above. In other implementations, the media file may be stored on the user device 605 in a wrapped form and may be unwrapped using license information stored in the local database 615 each time the media file is opened.

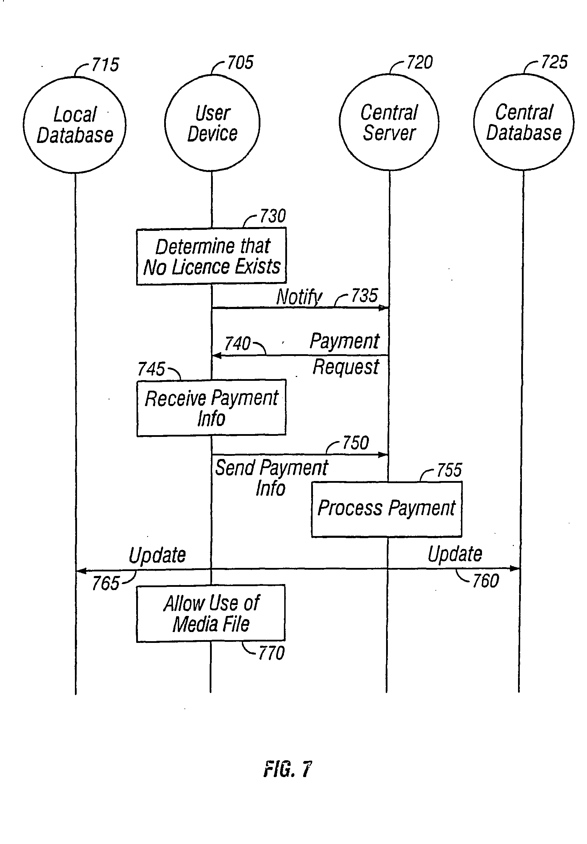

FIG 7 is a signaling and flow diagram of a process 700 for accessing a media file in a case where a user does not have a license for the media file. The process 700 involves operations on and communications between a user device 705, a local database 715, a central server 720, and a central database 725. The process 700 begins with a determination that the user does not have a license for the media file (step 730). This determination may be the result of a failed search for a license in step 675 of FIG 6. In response to this determination, the user device 705 notifies 735 the central server 720 that a license is needed. The central server 720 responds with a payment request 740, which is displayed on the user device 705 or the user is directed to a website where payment information can be obtained. The user device 705 receives payment information from the user (step 745) and sends the payment information to the central server 720. The payment information is processed (step 755), which may involve determining how much of the license fee is allocated to the content owner and/or to one or more users who have distributed the media file. The central database 725 is updated 760 with information indicating that the user has a license to the media file. The central database 725 may also be updated with payment allocation information. In addition, the local database 715 is updated 765 with information indicating that the user has a license to the media file. Based on the updated license information, the user may be allowed to use the media file on the user device 705 (step 770).

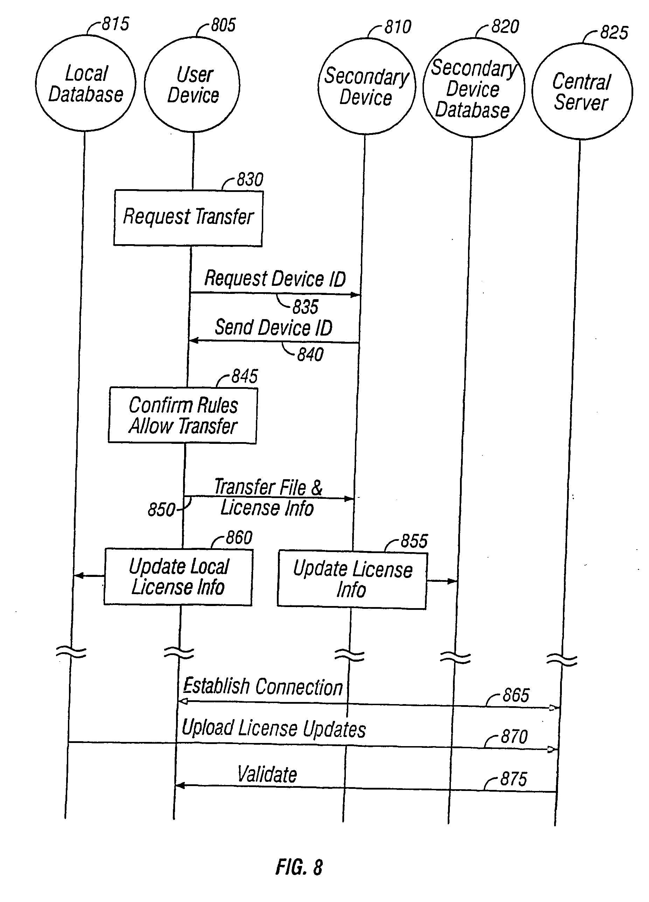

Some devices may not be capable of communicating directly with the central server if, for example, the devices cannot conveniently connect to the Internet. Media files may be transferred to such devices in a manner that prevents the media files from being further transferred to other devices without the wrapper. In these situations portions of the computer code may be installed in firmware and a small local license database may be installed in the device's writable memory. FIG. 8 is a signaling and flow diagram of a process 800 for copying or moving a media file from a user device 805 to a secondary device 810. The process 800 involves operations on and communications between the user device 805, the secondary device 810, a local database 815, a secondary device database 820, and a central server 825. The secondary device 810 may be, for example, a satellite connected car audio system, cellular phone, MP3 player, or other portable device and may connect to the user device using a cable such as but not limited to an IEE 1394 firewire or USB cable, or could be connected via a wireless connection. A version of the Solution Software may be pre-installed (e.g., at the factory) on the secondary device 810.

A request to transfer a media file is received by the user device 805 (step 830). In response, the user device 805 requests 835 a device ID from the secondary device 810. The secondary device responds 840 with its device ID. The user device 805 confirms that the business rules contained in the wrapper for the media file allow the requested transfer (step 845). For example, the business rules may place a limit on the number of devices to which the media file can be copied. Assuming that the transfer is permitted, the wrapped media file and the corresponding license information may be transferred 850 to the secondary device 810. The secondary device 810 may store the license information in the secondary device database 820 (step 855). The license information, in conjunction with the pre-installed Solution Software, may allow the secondary device 810 to access the wrapped media file. In addition, the user device 805 may update the local license information in the local database 815 (step 860). This update may store information indicating that a copy of the media file has been transferred to the secondary device 810.

Subsequently, a connection may be established 865 between the user device 805 and the central server 825. This connection may be established in response to an attempt to access a new media file, an attempt to locate license information, or a requirement that the user device 805 periodically validates the licenses stored in the local database 815 to continue using the licenses. Using the connection, the license updates stored in the local database 815 may be uploaded 870 to the central server 825 (and stored in the central database), which allows the central server to keep track of the devices on which copies of the media file are located and to prevent the media file from being copied onto more devices than are allowed under the business rules. The central server 825 may also validate 875 the existing licenses stored in the local database 815.

Techniques may also be provided for supporting the distribution of media files from user to user and allowing users to benefit from revenues generated as a result of their distribution of media files to others. A user may electronically send other consumers information about media files he owns or enjoys. If a sale is made as a result of the pass-along, the user may earn a percentage of the revenue generated from the sale of the media file and even subsequent sales of the media file. The media file wrapper can contain information identifying the original reseller and distributor in the event that the user received the media file from a recognized reseller and distributor, as well as information identifying the user who further distributes the media file. Based on business rules associated with the file, this information enables the reseller and the user to receive compensation for purchases made as the media file is passed along. Additionally, where a file is sent or received unwrapped, a referring user, reseller, and distributor can still be compensated as long as their unique identification is included with the transaction data. For example, it may be possible for a purchaser to identify a referring user, in which case the central server may determine how the referring user received the file and reconstruct the distribution chain, including identifying who should share in the revenue.

Business rules can determine if a user that has not licensed the media file can still profit from redistribution of the media file. For example, a user may house files on a server, acting as a redistribution point, and may be paid a pass-along participation fee, even though the user does not own a license for the files he/she is distributing.

When someone begins the process of sending a file to a friend, the Solution Software creates a newly wrapped version of the media file, preparing the media file for the pass-along process. This new wrapper includes the UFID for the media file, the business rules that apply to the media file, and the UCID for the originating user (or users), which allows the user (or users) to be compensated when he/she promotes a song that is purchased by the receiving user. Reseller and Distributor ID information can also be included in the wrapper. The Solution Software performs this same process when a user device is used to rip a CD or DVD. For example, when songs on a CD are ripped onto a computer, licenses for the songs are installed in the license database. Subsequently, if the songs are transferred through the I/O system for the computer, a wrapper may be applied to the songs. The wrapper may include licensing and payment information, which may be retrieved from the central database based on song identification information contained in the ripped file or based on identification information obtained using the file identification techniques discussed above. If the songs are burned onto a CD, wrapped files may be written to the CD. Alternatively, the Solution Software could create a dual session CD, which contains the media information files, such as the UFID and the UCID with reseller and distributor information, in the PC readable area of the CD. In a dual session CD format, traditional audio files could be permitted in the audio section of the CD, allowing the CD to be played on conventional CD players. If the files are loaded in a device on which the Solution Software is installed, however, the files would require licensing.

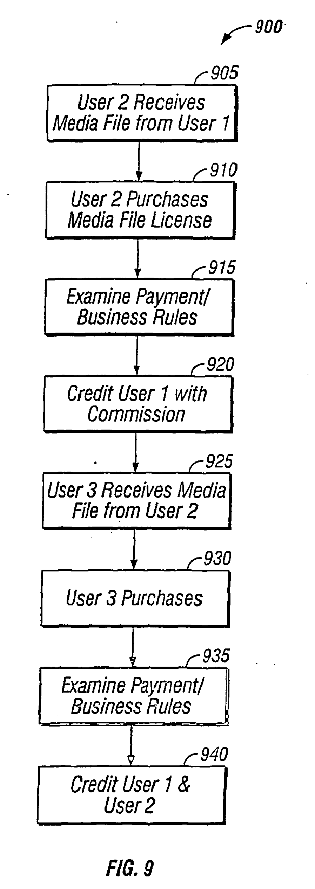

FIG 9 shows a flow diagram of an illustrative process 900 for performing a pass-along distribution. Initially, User2 receives a media file from User1 (step 905). User2 purchases a license for the media file received from User1 (step 910). In connection with the payment processing, the business rules associated with the media file are examined (step 915). This examination may be performed on a user device, at a central server, or at another location. User1 is then credited with a commission in an amount specified by the business rules (step 920). The commission may be credited to a micro-payment account managed by a central server, may be credited to User1 for use in future purchases of media file licenses, or may be deposited to User1's bank account through a micro-payment system.

Subsequently, User3 receives a media file from User2 (step 925). User3 purchases a license for the media file received from User2 (step 930). In connection with the payment processing, the business rules associated with the media file are again examined (step 935). User1 and User2 are then credited with a commission in an amount specified by the business rules (step 940). Accordingly, multiple levels of payments may be made for the distribution of the media file.

In some implementations, the central server credits and tracks all accounts from user pass-along activity, much like a savings account. All account holders can track and use their funds either in payment for additional music or as a withdrawal to be transferred as monetary funds via electronic funds transfer (EFT) or another suitable method. This applies to all parties that participate in the revenue stream including users, resellers, distributors, and content managers, such as record companies, publishers, and artists. The number of levels of payment and the amount of the payment to each level is established in the creation of the UFID by the holder of the ownership for the file (usually the copyright holder or publisher) and can vary depending on business rules.

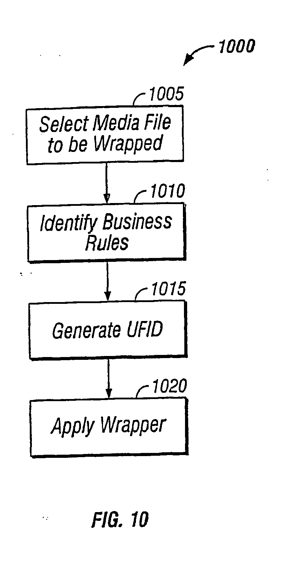

FIG 10 is a flow diagram of a process 1000 for wrapping a media file. The process begins with a selection of a media file to be wrapped (step 1005). Business rules to be associated with the media file are identified (step 1010). The business rules may be established by the owner or publisher of the media file. The business rules may include payment information and information relating to limitations on use and copying of the media file. A UFID is generated for the media file (step 1015). The UFID may incorporate the business rules and/or may serve as a pointer to business rules that are stored in the central database. Generally, the UFID is associated with a particular work (e.g., a specific recording by a specific artist) regardless of whether a specific copy of the work is wrapped or unwrapped. Accordingly, when file identification techniques are used to identify a media file, a recognized media file will have a particular UFID that corresponds to the media file. A wrapper that incorporates the UFID is then applied to the media file (step 1020). The wrapper generally includes an encryption of the media file, such that a user can only remove the wrapper with a license to the media file. , Although the Solution Software may generally preclude moving files without the wrapper, there may be situations in which a file may be moved without the wrapper, such as if a user bums a standard audio CD and the content of the CD is subsequently ripped into another computer. In the event that the file is moved without the wrapper, recognition techniques can be used to identify the file and look up the associated UFID and its business rules in the central database.

The described techniques can be implemented in digital electronic circuitry, integrated circuitry, or in computer hardware, firmware, software, or in combinations thereof. Apparatus for carrying out the techniques can be implemented in a software product (e.g., a computer program product) tangibly embodied in a machine-readable storage device for execution by a programmable processor; and processing operations can be performed by a programmable processor executing a program of instructions to perform the described functions by operating on input data and generating output. The techniques can be implemented advantageously in one or more software programs that are executable on a programmable system including at least one programmable processor coupled to receive data and instructions from, and to transmit data and instructions to, a data storage system, at least one input device, and at least one output device. Each software program can be implemented in a high-level procedural or object-oriented programming language, or in assembly or machine language if desired; and in any case, the language can be a compiled or interpreted language.

Suitable processors include, by way of example, both general and special purpose microprocessors. Generally, a processor will receive instructions and data from a read-only memory, a random access memory and/or a machine-readable signal (e.g., a digital signal received through a network connection). Generally, a computer will include one or more mass storage devices for storing data files; such devices include magnetic disks, such as internal hard disks and removable disks, magneto-optical disks, and optical disks. Storage devices suitable for tangibly embodying software program instructions and data include all forms of non-volatile memory, including by way of example semiconductor memory devices, such as EPROM (electrically programmable read-only memory), EEPROM (electrically erasable programmable read-only memory), and flash memory devices; magnetic disks such as internal hard disks and removable disks; magneto-optical disks; and CD-ROM disks. Any of the foregoing can be supplemented by, or incorporated in, ASICs (application-specific integrated circuits).

In some implementations, the user device on which a file is displayed, played, or otherwise delivered to the user may not have a local storage medium or memory that is capable of or sufficient to store the Solution Software and/or the local license database. In such a case, the file may be streamed to, or otherwise temporarily stored on, the user device. Accordingly, the processor or processors on which the Solution Software is run, and thus that control access to the file, may be located remotely. Such remote processors may serve as proxies for user devices that cannot store information locally.

To provide for interaction with a user, the techniques can be implemented on a computer system having a display device such as a monitor or LCD (liquid crystal display) screen for displaying information to the user and a keyboard and a pointing device such as a mouse or a trackball by which the user can provide input to the computer system or a system which enables input and presents information via voice, symbols, or other means such as a Braille input and output system. The computer system can be programmed to provide a graphical user interface through which computer programs interact with users. With new technologies such as voice input and output, it is not a requirement to have a visual display to implement the described techniques.

A number of implementations have been described. Nevertheless, it will be understood that various modifications may be made. For example, the steps in the processes illustrated in FIGS. 1 and 3-10 may be rearranged and/or certain steps may be omitted. Accordingly, other implementations are within the scope of the following claims.

## Claims

1. A method for facilitating digital rights management on a user device, the method comprising:
collecting information relating to a user device from the user device, with the information relating to the user device including unique identification data for the user device, the method **characterized by**:
generating a digital key using the collected information;
storing the digital key;
encrypting the digital key;
sending the encrypted key to the user device for storage on the user device;
receiving, from the user device, the encrypted key and information relating to the user device; and
validating the user device using at least two of the received encrypted key, the received information, and the stored digital key.

2. The method of claim 1 further **characterized by** collecting identification information relating to a user of the user device, wherein the digital key is generated using the identification information relating to the user.

3. The method of claim 1 or 2 wherein the collected information is collected in accordance with executable code stored on the user device.

4. The method of any of claims 1-3 wherein the digital key is generated by and stored on a central server.

5. The method of any of claims 1-4 wherein validating the user device comprises:
decrypting the encrypted key; and
comparing the encrypted key to the stored digital key.

6. The method of any of claims 1-5 wherein validating the user device comprises:
generating a digital key using the received information relating to the user device; and
comparing the digital key to the stored digital key.

7. The method of any of claims 1-6 further **characterized by** authorizing access to a license database in response to validating the user device.

8. The method of any of claim 1-7 further **characterized by** authorizing access to a digital file in response to validating the user device.

9. The method of any of claim 1-8 wherein the unique identification data is extracted from a non-volatile storage area of the user device.

10. An article comprising a machine-readable medium storing instructions for causing one or more processors to perform operations comprising:
receiving information relating to a user device from the user device, with the received information including unique identification data for the user device;
generating a digital key using the received information;
storing the digital key;
encrypting the digital key;
sending the encrypted key to the user device for storage on the user device;
receiving, from the user device, the encrypted key and collected information relating to the user device, with the collected information being collected by the user device in accordance with instructions stored on the user device; and
validating the user device using at least two of the received encrypted key, the collected information, and the stored digital key.

11. The article of claim 10 wherein the machine-readable medium stores instructions for causing one or more processors to perform further operations comprising:
receiving from the user device a request for an authorization to access a data file; and
sending the authorization to access the data file in response to validating the user device.

12. The article of claim 11 wherein the encrypted key and the collected information is received in connection with the request for the authorization.

13. The article of claim 11 or 12 wherein the machine-readable medium stores instructions for causing one or more processors to perform further operations comprising storing an indication of the authorization to access the data file in response to validating the user device.

14. The article of any of claims 10-13 wherein the machine-readable medium stores instructions for causing one or more processors to perform further operations comprising:
receiving a unique identifier for a user associated with the user device; and
generating the digital key further using the unique identifier for the user.

15. An article comprising a machine-readable medium storing instructions for causing one or more processors to perform operations comprising:
receiving a digital key;
storing the digital key in a non-volatile memory;
storing license information for at least one digital file in a license database in a volatile storage area, wherein the digital key comprises location data for the license database;
identifying an attempt to access a specific digital file;
accessing the license database using the location data from the digital key; and
allowing access to the digital file using the digital key if the license database includes license information identifying a license to the specific digital file.

16. The article of claim 15 wherein the digital key comprises data specific to a user device and the machine-readable medium stores instructions for causing one or more processors to perform further operations comprising:
retrieving identification information from the user device; and
validating the digital key using the identification information and the data specific to the user device.

17. The article of claim 15 or 16 wherein the machine-readable medium stores instructions for causing one or more processors to perform further operations comprising preventing access to the digital file if the license database does not include license information identifying a license to the specific digital file.

18. The article of any of claims 15-17 wherein the digital key comprises data necessary to decrypt at least one of the license database and the license information.

19. The article of any of claims 15-18 wherein the license information includes data necessary to disable a digital wrapper applied to the specific digital file.
